# EUROPÄISCHE PATENTSCHRIFT

(11) **EP 2 296 948 B1**
(45) Veröffentlichungstag und Bekanntmachung des Hinweises auf die Patenterteilung: **23.11.2011**
(21) Anmeldenummer: 09776742.0
(22) Anmeldetag: 16.06.2009
(51) Int. Cl.: B60T 1/10, B60T 11/18, B60T 13/58

(54) **BREMSKRAFTVERSTÄRKER FÜR EINE KRAFTFAHRZEUGBREMSANLAGE UND ENTSPRECHENDE KRAFTFAHRZEUGBREMSANLAGE**
BRAKE BOOSTER FOR AN AUTOMOTIVE BRAKE SYSTEM AND CORRESPONDING AUTOMOTIVE BRAKE SYSTEM
SERVOFREIN POUR UN SYSTÈME DE FREINAGE DE VÉHICULE À MOTEUR ET SYSTÈME DE FREINAGE DE VÉHICULE À MOTEUR CORRESPONDANT

(30) Priorität: 09.07.2008 DE 102008032257
(43) Veröffentlichungstag der Anmeldung: 23.03.2011
(73) Patentinhaber: Lucas Automotive GmbH, 56070 Koblenz (DE)
(72) Erfinder: FRIEDSAM, Ludwig, 56651 Oberdürenbach (DE); KLÖCK, Stefan, 56290 Dorweiler (DE)
(74) Vertreter: Thum, Bernhard
(86) Internationale Anmeldenummer: PCT/EP2009/004333
(87) Internationale Veröffentlichungsnummer: WO 2010/003517

(56) Entgegenhaltungen:
- EP-A2- 1 955 914
- WO-A2-2006/029353
- DE-A1-102006 055 765
- DE-A1-102007 039 182

## Beschreibung

Die vorliegende Erfindung betrifft einen Bremskraftverstärker für eine Kraftfahrzeugbremsanlage mit regenerativer Bremskrafterzeugung umfassend: ein Krafteingangsglied, das mit einem Bremspedal koppelbar oder gekoppelt ist, eine Kammeranordnung mit einer Unterdruckkammer und einer Arbeitskammer, die über eine bewegliche Wand voneinander getrennt sind, ein Steuerventil, über das nach Maßgabe einer Verlagerung des Krafteingangsglieds die Arbeitskammer wahlweise mit der Unterdruckkammer und der Atmosphäre zum Erzeugen und Abbauen eines Differenzdrucks an der beweglichen Wand verbindbar ist, wobei das Steuerventil ein Steuerventilgehäuse aufweist, das zur gemeinsamen Bewegung mit der beweglichen Wand verbunden ist.

Bremskraftverstärker sind seit langer Zeit Bestandteil von modernen Kraftfahrzeugbremsanlagen. Sie dienen dazu, die von einem Fahrer auf ein Bremspedal ausgeübte Bremskraft mittels einer synthetisch erzeugten Servokraft zu verstärken, um so eine komfortable Betätigung des Bremssystems des Kraftfahrzeugs zu ermöglichen. Mit anderen Worten sorgt ein herkömmlicher Bremskraftverstärker dafür, dass ein Fahrer am Bremspedal eine geringere Betätigungskraft aufbringen muss, um die Bremsanlage zu betätigen, als dies ohne Bremskraftverstärker der Fall wäre. In jüngerer Zeit wurden Bremskraftverstärker auch mehr und mehr dazu eingesetzt, um unabhängig vom Fahrer die Bremsanlage anzusteuern. In diesem Zusammenhang wird auch neben dem generischen Begriff "Bremskraftverstärker" häufig der Begriff "Bremskrafterzeuger" verwendet. Eine solche fahrerunabhängige Betätigung ist beispielsweise dann erforderlich, wenn Fahrassistenzsysteme eine Aktivierung der Bremsanlage unabhängig vom Fahrer vornehmen, beispielsweise bei Auftreten von Gefahrensituationen oder bei übermäßiger oder zu schwacher Betätigung durch den Fahrer.

Ein herkömmlicher Vakuumbremskraftverstärker ist beispielsweise aus dem Dokument DE 34 13 739 A1 bekannt. Zusätzlich zu der herkömmlichen Verstärkerfunktion ist bei diesem Stand der Technik vorgesehen, die in dem Bremskraftverstärker im Betätigungsfall auftretenden Luftströme, welche verhältnismäßig hohe Strömungsgeschwindigkeiten aufweisen können, mittels einzelner Flügel eines Luftleitelements in gewünschter Weise zu führen, um so Turbulenzen zu vermeiden, die zu einer unerwünschten Geräuschentwicklung führen können.

Herkömmliche Bremskraftverstärker finden auch bei den in jüngerer Zeit populärer werdenden Hybrid-Fahrzeugen Anwendung. Derartige Fahrzeuge zeichnen sich dadurch aus, dass sie neben einem Verbrennungsmotor auch eine zweite, alternative Antriebsquelle aufweisen, beispielsweise einen Elektromotor, der zugleich auch regenerativ eingesetzt werden kann. Dabei ist vorgesehen, dass der Elektromotor beispielsweise beim Abbremsen des Fahrzeugs als Generator benutzt wird, wobei der Energiebedarf hierfür eine Verzögerung des Kraftfahrzeugs bewirkt. Es hat sich gezeigt, dass eine derartige regenerative Verzögerung des Kraftfahrzeugs zwar in bestimmten Betriebssituationen ausreicht, um die vom Fahrer durch eine Betätigung des Bremspedals angeforderte Verzögerungswirkung abzudecken. Im Fall stärkerer Bremsungen, insbesondere Notbremsungen, kann diese Verzögerungswirkung jedoch den angeforderten Verzögerungsbedarf bei weitem nicht abdecken. Es ist daher erforderlich, zusätzlich zu der mit dem als Generator wirkenden Elektromotor hervorgerufenen Verzögerungswirkung auch noch ein Abbremsen des Kraftfahrzeugs mittels eines herkömmlichen Bremssystems zu ermöglichen.

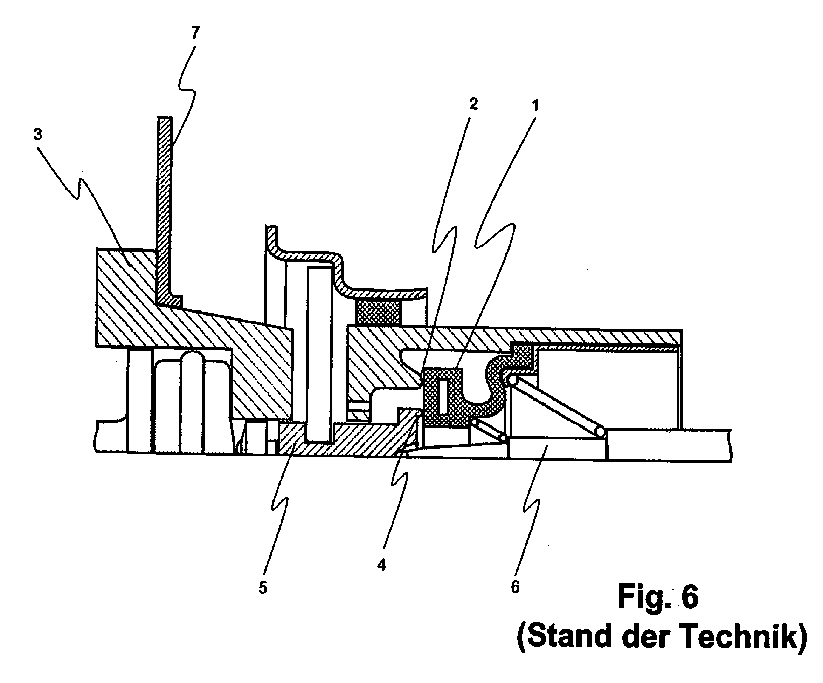

Herkömmliche Bremskraftverstärker, wie beispielsweise in dem Dokument DE 34 13 739 A1 beschrieben, haben jedoch den Nachteil, dass sie bei einer Bremspedalbetätigung unmittelbar ansprechen. Dies wird anhand der beigefügten Figur 6 kurz erläutert, die wesentliche Komponenten eines herkömmlichen Bremskraftverstärkers in einer Ausgangsstellung zeigt. In dieser Ausgangsstellung des Bremskraftverstärkers liegt ein Ventilglied 1 dichtend an einem ersten Dichtsitz 2 eines Steuerventilgehäuses 3 an. Ferner liegt ein zweiter Dichtsitz 4 eines Übertragungselements 5, das mit einem Krafteingangsglied 6 zur gemeinsamen Bewegung gekoppelt ist, ebenfalls dichtend an dem Ventilglied 1 an. Der erste Dichtsitz 2 trennt in der gezeigten Stellung eine Arbeitskammer von einer Unterdruckkammer. Der zweite Dichtsitz 4 trennt in der gezeigten Stellung die Arbeitskammer von der Umgebungsatmosphäre. Wird nun das Krafteingangsglied 6 aus der in Figur 6 gezeigten Stellung durch eine Bremspedalbetätigung herausbewegt, so kommt es unmittelbar zu einer Trennung von zweitem Dichtsitz 4 und Ventilglied 1 und damit zu einer fluidischen Verbindung zwischen Arbeitskammer und Umgebungsatmosphäre. In der Folge baut sich eine Druckdifferenz an einer beweglichen Wand 7 auf. Mit anderen Worten spricht der Bremskraftverstärker gemäß dem Stand der Technik unmittelbar auf eine Pedalbetätigung an. Dieses unmittelbare Ansprechen des Bremskraftverstärkers auf eine Bremspedalbetätigung erschwert seinen Einsatz in Hybridfahrzeugen erheblich. Insbesondere ist eine Koordinierung der vom Elektromotor erzeugten Verzögerungswirkung und der vom herkömmlichen Bremssystem erzeugten Verzögerungswirkung mit derartigen Bremskraftverstärkern schwierig.

Aus dem Dokument DE 10 2006 055 765 A1 ist ein Verfahren zum Betrieb einer Kraftfahrzeugbremsanlage bekannt, bei der hydraulisch betätigbare Radbremsen an einer Vorderachse und elektromechanisch betätigbare Radbremsen an einer Hinterachse vorgesehen sind. Die der Hinterachse zugeordneten Fahrzeugräder werden zeitweise von einem Elektromotor angetrieben, der zur Rückgewinnung von Energie im Bremsfall als Generator betreibbar ist und im Generatorbetrieb eine Bremskraft an den der Hinterachse zugeordneten Fahrzeugrädern bewirkt. Bei geringen vom Fahrer angeforderten Bremsverzögerungen wird der Anteil der Bremskraft an den Fahrzeugrädern der Vorderachse gegenüber dem Anteil der Bremskraft an den Fahrzeugrädern der Hinterachse reduziert, so dass die Bremskraft weitreichend über den Generatorbetrieb der Elektromotoren erreicht wird.

Das Dokument WO 2006/029353 A2 beschreibt ein Verfahren zum Steuern einer Bremsanlage eines Fahrzeugs, wobei in einer frühen Bremsphase zur regenerativen, d.h. energiegewinnenden Bremsung über einen als Generator wirkenden Elektromotor abgebremst wird und bei höheren erforderlichen Bremskräften zusätzlich in herkömmlicher Weise Reibungsbremsen verwendet werden.

Es ist demgegenüber eine Aufgabe der vorliegenden Erfindung, einen Bremskraftverstärker der eingangs bezeichneten Art bereitzustellen, der sich besser für den Einsatz in Kraftfahrzeugbremsanlagen mit regenerativer Bremskrafterzeugung eignet.

Diese Aufgabe wird durch einen Bremskraftverstärker der eingangs bezeichneten Art gelöst, bei dem vorgesehen ist, dass in einer ersten Betätigungsphase des Bremskraftverstärkers aus seiner Ruhestellung heraus das Krafteingangsglied relativ zu dem Steuerventilgehäuse um einen Leerweg verlagerbar ist, in dem das Steuerventil zum Unterdrücken eines Aufbaus eines Differenzdrucks an der beweglichen Wand unbetätigt bleibt.

Erfindungsgemäß bleibt der Bremskraftverstärker demnach bei einer Betätigung des Bremspedals und einer daraus resultierenden Verlagerung des Krafteingangsglieds in der ersten Betätigungsphase zunächst passiv, das heißt an der beweglichen Wand wird keine Druckdifferenz in dieser ersten Betätigungsphase erzeugt, obgleich das Bremspedal betätigt und das Krafteingangsglied verlagert wurde. In dieser ersten Betätigungsphase, die durch die Dimensionierung des Leerwegs bestimmt ist, kann die Verzögerungswirkung allein durch das Antreiben des Elektromotors oder einer anderen Energieerzeugungseinrichtung erfolgen. Obgleich der Fahrer das Bremspedal betätigt hat und eine Verzögerungswirkung erfährt, nämlich durch Antreiben des Elektromotors oder einer alternativen Energiequelle, ist die herkömmliche Fahrzeugbremsanlage in dieser ersten Betätigungsphase zunächst noch passiv.

Gemäß einer Weiterbildung der Erfindung kann vorgesehen sein, dass das Steuerventil in der ersten Betätigungsphase eine fluidische Verbindung zwischen Unterdruckkammer und Arbeitskammer vorsieht und in einer zweiten Betätigungsphase nach Überschreiten des Leerwegs durch das Krafteingangsglied das Steuerventil zum Aufbau eines Differenzdrucks an der beweglichen Wand umschaltet. Dies bedeutet, dass erst nach Überschreiten des Leerwegs und nach Beendigung der ersten Betätigungsphase eine Aktivierung der Kraftfahrzeugbremsanlage erfolgt, wobei mit Beginn dieser zweiten Betätigungsphase der Bremskraftverstärker in an sich herkömmlicher Weise - jedoch verzögert - aktiviert wird. In diesem Zusammenhang kann vorgesehhen sein, dass mit Beginn der zweiten Betätigungsphase zunächst die Verzögerungswirkung des Elektromotors noch beibehalten wird oder alternativ der Elektromotor vom Antriebsstrang abgekoppelt wird, sodass die Verzögerungswirkung allein über die herkömmliche Bremsanlage des Fahrzeugs erfolgt.

Um diese Funktionsweise zu realisieren, sieht eine Ausführungsform der Erfindung vor, dass das Steuerventil ein Ventilglied aufweist, das gegen einen ersten Dichtsitz dichtend anlegbar ist, der an dem Steuerventilgehäuse ausgebildet ist und zur fluidischen Trennung von Unterdruckkammer und Arbeitskammer dient, und das gegen einen zweiten Dichtsitz dichtend anlegbar ist, der an einem Übertragungselement ausgebildet ist und zur fluidischen Trennung von Arbeitskammer und Umgebungsatmosphäre dient, wobei in der ersten Betätigungsphase der erste Dichtsitz von dem Ventilglied abgehoben und der zweite Dichtsitz dichtend an dem Ventilglied anliegt. Anders als beim eingangs mit Bezug auf Figur 6 diskutierten Stand der Technik liegen demzufolge in der Ausgangsstellung gemäß der vorliegenden Erfindung die beiden Dichtsitze nicht an dem Ventilglied an. Vielmehr liegt während der ersten Betätigungsphase eine fluidische Verbindung zwischen Unterdruckkammer und Arbeitskammer vor, die mit Beendigung der ersten Betätigungsphase unterbrochen wird, woraufhin das Steuerventil bei einer weiteren Betätigung des Krafteingangsglied aktivierbar ist.

Eine Weiterbildung der Erfindung sieht vor, dass eine Anschlageinrichtung den Leerweg bestimmt. Dabei kann vorgesehen sein, dass die Anschlageinrichtung an dem Steuerventilgehäuse ausgebildet ist und dieses in einer der Ruhestellung zugeordneten Ausgangsstellung hält. Mit anderen Worten wird das Steuerventilgehäuse in einer Ausgangsstellung gehalten, aus der es erst nach Durchlaufen des Leerwegs durch das Krafteingangsglied infolge eines Umschaltens des Steuerventils und eines daraus resultierenden Aufbaus einer Druckdifferenz an der beweglichen Wand verlagert wird. So kann erfindungsgemäß vorgesehen sein, dass die Anschlageinrichtung eine um das Steuerventilgehäuse umlaufende Ringformation ist, die in der Ruhestellung an einer Gegenanschlagformation am Verstärkergehäuse anliegt. Alternativ hierzu können auch einzelne punktuelle Anschlagbereiche am Steuerventilgehäuse vorgesehen sein. Nachdem das Steuerventilgehäuse bei heutigen Bremskraftverstärkern üblicherweise aus einem Spritzgussmaterial hergestellt ist, sieht eine Weiterbildung der Erfindung vor, dass die Anschlageinrichtung integral an dem Steuerventilgehäuse angeformt ist. Dies erleichtert wesentlich die Fertigung.

Alternativ zur Anbringung am Steuerventilgehäuse kann erfindungsgemäß ferner vorgesehen sein, dass die Anschlageinrichtung an der beweglichen Wand ausgebildet ist, und diese in einer der Ruhestellung zugeordneten Ausgangsstellung arretiert. In diesem Zusammenhang kann vorgesehen sein, dass die Anschlageinrichtung in Form eines Anlageelements an wenigstens einem Zugbolzen ausgebildet ist, die sich durch das Verstärkergehäuse hindurch erstrecken. Eine Ausführungsvariante sieht dabei vor, dass das Anlageelement eine an dem Zugbolzen verstellbar anbringbare Einstellscheibe oder Einstellmutter ist. Ferner kann erfindungsgemäß vorgesehen sein, dass eine Mehrzahl von Anlageelementen in regelmäßigen Winkelabständen bezüglich einer Mittelachse des Bremskrafterzeugers angeordnet sind.

Alternativ zu einer Anschlageinrichtung, die unmittelbar einem oder mehreren Zugbolzen zugeordnet ist, sieht eine Weiterbildung der Erfindung vor, dass die Anschlageinrichtung eine Anlagefläche an der beweglichen Wand sowie eine korrespondierende Anlagefläche an dem Verstärkergehäuse aufweist.

Zur Ansteuerung des regenerativen Bremssystems, insbesondere zum bedarfsweisen Abschalten des Generators und dessen Verzögerungswirkung, kann vorgesehen sein, dass dieser mit einer Wegerfassungseinrichtung zum Erfassen des Betätigungswegs das Krafteingangsglieds ausgebildet ist. Dadurch lässt sich zuverlässig ermitteln, ob das Krafteingangsglied den Leerweg durchschritten hat oder nicht.

Die Erfindung betrifft ferner eine Kraftfahrzeugbremsanlage mit einem einzelnen Rädern zugeordneten Bremssystem, einem mit dem Antriebsstrang des Kraftfahrzeugs kraftwirksam gekoppelten und als Generator nutzbaren Elektromotor und einem Bremskraftverstärker nach einem der vorangehenden Ansprüche, wobei bei einer Betätigung des Krafteingangsglieds in der ersten Betätigungsphase des Bremskraftverstärkers eine Verzögerungswirkung über die Generatorwirkung des Elektromotors erfolgt, wobei eine Servokrafterzeugung über eine an der beweglichen Wand anliegende Druckdifferenz unterbleibt. Dabei kann vorgesehen sein, dass eine elektronische Steuereinrichtung die Verzögerungswirkung des Elektromotors zumindest in der ersten Betätigungsphase steuert.

Die Erfindung wird im Folgenden beispielhaft anhand der beiliegenden Figuren erläutert. Es stellen dar:
Fig. 1 eine achsenthaltende Schnittansicht eines erfindungsgemäßen Bremskraftverstärkers;
Fig. 2 eine vergrößerte Ansicht des in Fig. 1 mit II gekennzeichneten Bereichs zur Erläuterung einer Variante einer Anschlageinrichtung;
Fig. 3 eine vergrößerte Ausschnittsansicht eines Bereichs III aus Fig. 1, jedoch von einer abgewandelten alternativen Ausführungsform;
Fig. 4 eine Einzelteildarstellung eines Steuerventilgehäuses einer weiteren alternativen Ausführungsform zur Erfindung;
Fig. 5 eine schematische Darstellung zur Erläuterung der Erfindung; und
Fig. 6 eine schematische Darstellung entsprechend Figur 5 zum Stand der Technik.

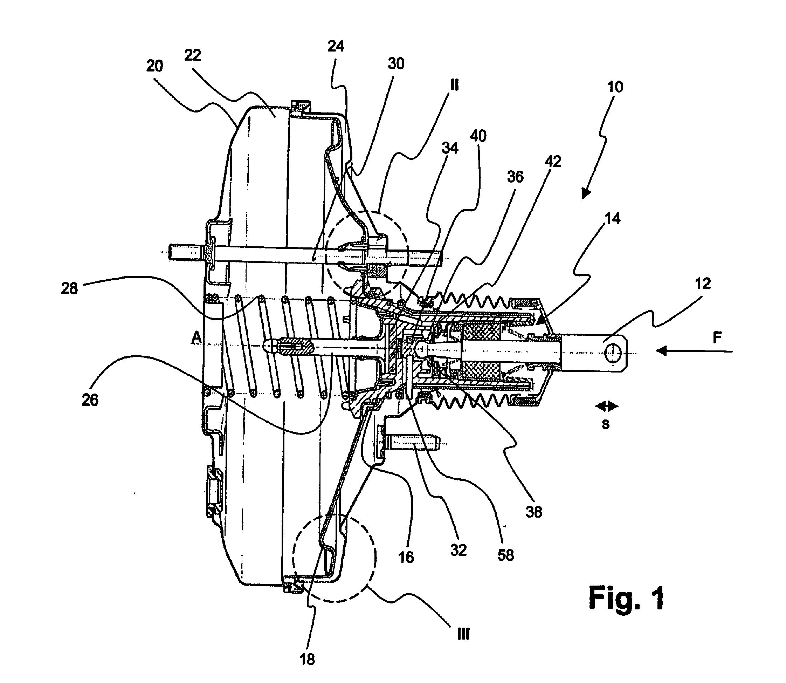

In Fig. 1 ist einer erfindungsgemäßer Bremskraftverstärker in einer achsenthaltenden Schnittansicht gezeigt und allgemein mit 10 bezeichnet. Dieser umfasst ein Krafteingangsglied 12, das über ein nicht gezeigtes Bremspedal mit einer Kraft F beaufschlagt werden kann und entlang einer Längsachse A verlagerbar ist.

Das Krafteingangsglied 12 erstreckt sich mit einem schaftartigen Abschnitt in Fig. 1 nach links entlang der Längsachse A in ein Steuerventil 14 hinein. Das Steuerventil 14 umfasst ein Steuerventilgehäuse 16, das entlang der Längsachse A verlagerbar ist. Das Steuerventilgehäuse 16 ist zur gemeinsamen Bewegung mit einer beweglichen Wand 18 fest verbunden. Die bewegliche Wand 18 ist in einem Verstärkergehäuse 20 zusammen mit dem Steuerventilgehäuse 16 verlagerbar geführt. Sie trennt eine Unterdruckkammer 22 von einer Arbeitskammer 24. Die Unterdruckkammer 22 ist dauerhaft mit einer Unterdruckquelle verbunden. Die Arbeitskammer 24 ist über das Steuerventil 14 wahlweise mit der Unterdruckkammer 22, und damit mit der Unterdruckquelle verbunden, oder von dieser getrennt, wobei im letztgenannten Fall die Arbeitskammer 24 mit der Umgebungsatmosphäre verbindbar ist. Sobald die Arbeitskammer 24 mit der Umgebungsatmosphäre verbunden wird, baut sich an der beweglichen Wand 18 eine Druckdifferenz auf, das heißt in der Arbeitskammer 24 herrscht ein größerer Druck als in der Unterdruckkammer 22. Diese Druckdifferenz führt zu einer Servokraft, die eine Verlagerung des Steuerventilgehäuses 16 in Fig. 1 nach links unterstützt. Mit dem Steuerventilgehäuse 16 bewegt sich in axialer Richtung A ein Übertragungskolben 26, der diese Servokraft zusammen mit der Betätigungskraft in Fig. 1 nach links zu einer Hauptbremszylinderanordnung überträgt.

Ferner erkennt man in Fig. 1 eine Rückstellfeder 28, die die bewegliche Wand 18 zusammen mit dem Steuerventilgehäuse 16 in die in Fig. 1 gezeigte Ausgangsstellung spannt.

Das Verstärkergehäuse 20 wird über Zugbolzen 30 zusammengehalten, die an ihrem freien Ende 32 an einer Spritzwand eines Kraftfahrzeugs befestigt werden können.

Das Steuerventil 14 selbst ist in an sich bekannter Weise aufgebaut. Es umfasst ein gummielastisches Reaktionsglied 34, das sich im Betätigungsfall quasi-hydraulisch verhält. Darüber hinaus umfasst es zwei Ventilsitze 36 und 38. Der Ventilsitz 38 ist in der in Fig. 1 gezeigten unbetätigten Ausgangsstellung geschlossen. Er trennt die Arbeitskammer 24 von der Atmosphäre.

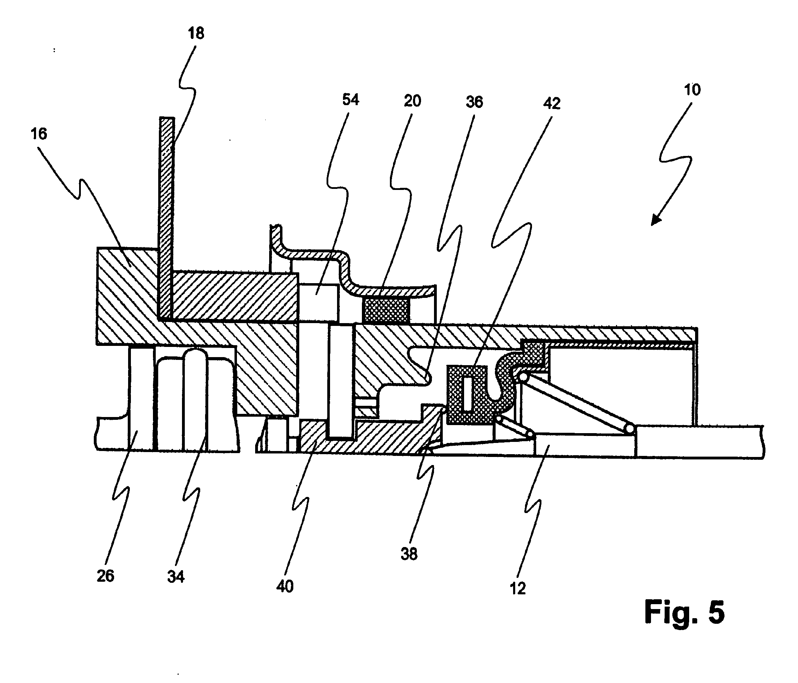

Ein wesentlicher Unterschied der Erfindung zu einem herkömmlichen Bremskraftverstärker besteht jedoch darin, dass der Ventilsitz 36 in der unbetätigten Ausgangsstellung geöffnet ist, so dass eine permanente Verbindung zwischen der Arbeitskammer 24 und der Unterdruckkammer 22 besteht. Dies ist anhand der schematischen Darstellung von Figur 5 erkennbar. In dieser Figur erkennt man, dass ein Ventilglied 42 in der unbetätigten Ausgangsstellung von einem Übertragungselement 40, an dem der Ventilsitz 38 ausgebildet ist, in einem Abstand s von dem Ventilsitz 36 gehalten ist. Erst dann, wenn dieser Abstand s - im Folgenden auch Leerweg s genannt - von dem Krafteingangsglied 12 durchlaufen wurde, wobei das Übertragungselement 40 mitgenommen wird, kann sich das Ventilglied 42 an den Dichtsitz 36 anlegen. Dadurch wird die Arbeitskammer 24 von der Unterdruckkammer 22 pneumatisch getrennt. Dies bedeutet, dass der in Figur 6 gezeigte Ausgangszustand eines herkömmlichen Bremskraftverstärkers nach dem Stand der Technik bei dem Bremskraftverstärker 10 gemäß der vorliegenden Erfindung, wie In Fig. 5 gezeigt, erst nach Durchlaufen des Leerweg s in Folge einer Betätigung des Krafteingangsglieds 12 erreicht wird. Erst dann, wenn dieser Leerweg s durchlaufen wurde und sich das Ventilglied 42 an den Dichtsitz 36 anlegt, kann der erfindungsgemäße Bremskraftverstärker 10 pneumatisch aktiv werden.

Bei einer weiteren Betätigung des Krafteingangsglieds 12 über den Leerweg s hinaus, bewegt sich nämlich das Übertragungselement 40 weiter mit und sein Ventilsitz 38 wird von dem Ventilglied 42 abgehoben, so dass es zu einer fluidischen Verbindung zwischen Arbeitskammer 24 und Umgebungsatmosphäre kommt. In der Folge baut sich ein Differenzdruck an der beweglichen Wand 18 auf. Infolgedessen bewegt sich die bewegliche Wand 18 zusammen mit dem Steuerventilgehäuse in Fig. 1 nach links, bis sich der Ventilsitz 36 wieder schließt. Von diesem Zustand ausgehend lässt sich bei weiterem Niederdrücken des Bremspedals das Krafteingangsglied 12 weiter nach links verlagern, mit der Folge desselben Ablaufs, wie vorstehend für eine Bewegung aus der Ausgangsstellung heraus beschrieben. Ein Freigeben des Krafteingangsglied 12 führt zu einer Rückstellbewegung aufgrund der Federkraft der Rückstellfeder 28, wobei es zu einem Druckausgleich zwischen Arbeitskammer 24 und Unterdruckkammer 22 kommt, bis der Bremskraftverstärker 10 wieder seine Ausgangsstellung einnimmt.

Insofern funktioniert der Bremskraftverstärker nach Durchlaufen des Leerwegs s so, wie ein herkömmlicher Bremskraftverstärker. Die Erfindung zielt allerdings auf das verzögerte Ansprechverhalten des Bremskraftverstärkers ab. Tatsächlich spricht der Bremskraftverstärker gemäß der vorliegenden Erfindung bei einer Verlagerung des Krafteingangsglieds 12 im Vergleich zu einem herkömmlichen Bremskraftverstärker verzögert an. Mit anderen Worten kann sich das Krafteingangsglied 12 erst um einen Leerweg s in Fig. 1 nach links bewegen, bevor es zu den vorstehend beschriebenen Vorgängen im Steuerventil 14 kommt, durch welche eine Druckdifferenz an der beweglichen Wand 18 erzeugt wird. Dies wird dadurch erreicht, dass das Steuerventilgehäuse 16 im Vergleich zum Stand der Technik in seiner Ausgangsstellung in weiter vorgerückter Position gehalten wird.

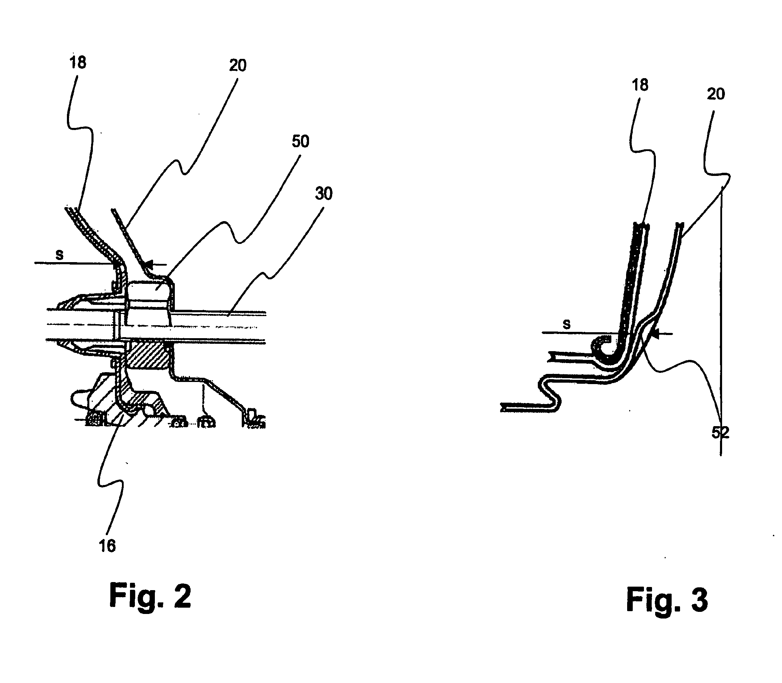

In einer ersten Ausführungsform der Erfindung wird diese vorgerückte Positionierung des Steuerventilgehäuses 16 dadurch erreicht, wie in Fig. 2 gezeigt, dass die bewegliche Wand 18, die fest mit dem Steuerventilgehäuse 16 zur gemeinsamen Bewegung gekoppelt ist, relativ zu dem Verstärkergehäuse 20 über Anschlagmuttern 50 in einer vorgerückten Ausgangsstellung gehalten wird, die den Leerweg s des Krafteingangsglieds 12 vorsieht, bis dieses wirksam mit dem Steuerventil 14 in Wechselwirkung treten kann. Die Anschlagmuttern 50 sind auf den Zugbolzen 30 des Bremskraftverstärkers 10 aufgeschraubt. Sie besitzen eine derartige Breite, dass sie den vorstehend bezeichneten Leerweg s definieren. Die Anschlagmuttern 50 sind verstellbar auf den Bolzen 30 angeordnet, so dass der Leerweg s bedarfsweise sogar eingestellt werden kann.

Fig. 3 zeigt eine zweite Ausführungsvariante der Erfindung. Statt über die Anschlagmuttern 50, wie in Fig. 2 gezeigt, wird die bewegliche Wand 18 über lokale Ausprägungen 52 im Verstärkergehäuse in der vorgerückten Ausgangsstellung gehalten, in der der Leerweg s (siehe Fig. 1) bereitgestellt wird. Auch dadurch kann erreicht werden, dass bei einer Betätigung des Krafteingangsglieds 12 ein Ansprechen des Steuerventils erst mit einer Verzögerung erfolgt.

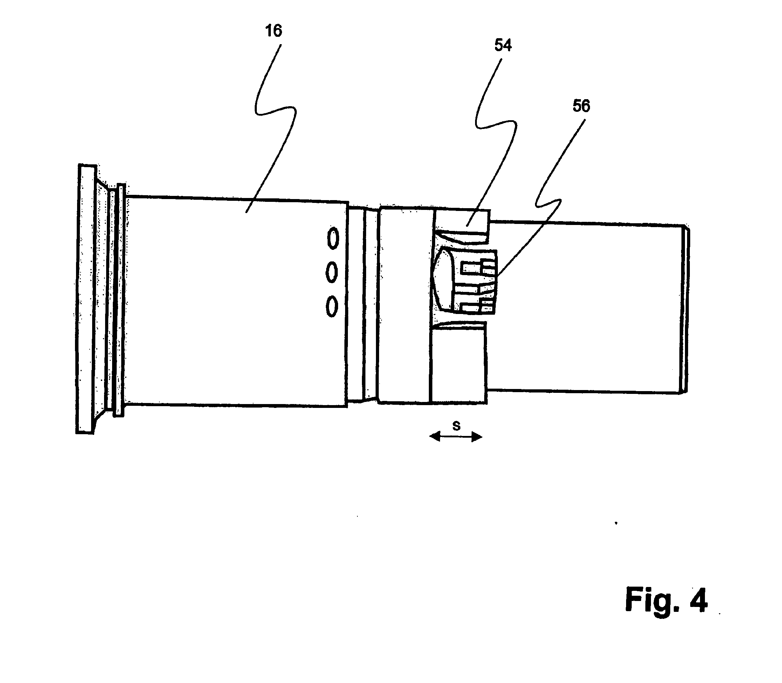

Alternativ zu einem Halten der beweglichen Wand 18 relativ zu dem Verstärkergehäuse 20 über entsprechende Anschläge sieht die dritte Ausführungsform der Erfindung vor, wie in Fig. 4 gezeigt, dass das Steuerventilgehäuse 16 mit einem Anschlagelement 54 versehen ist, mit dem es gegen das Verstärkergehäuse anschlägt, und so in einer Ausgangsstellung gehalten wird, die den Leerweg s gewährleistet. Das Anschlagelement 54 ist dabei als separater Ring ausgebildet, der an dem Steuerventilgehäuse 16 angebracht ist. Alternativ können auch integral angeformte Anschläge am Steuerventilgehäuse 16 vorgesehen sein.

In Fig. 4 erkennt man auch einen Durchbruch 56 im Steuerventilgehäuse 16, durch den sich ein Anschlagriegel 58 (siehe Fig. 1) erstrecken kann.

Zu der in Figur 5 gezeigten schematischen Darstellung sei angemerkt, dass bei dieser Ausführungsvariante der Riegel 58 verkürzt ausgebildet werden kann, weil das Steuerventilgehäuse 16 in seiner Bewegung relativ zum Verstärkergehäuse 20 über das Anschlagelement 54 blockiert wird. Der Riegel 58 sorgt somit lediglich für eine Beschränkung der Relativbewegung zwischen Krafteingangsglied und Steuerventilgehäuse. Dabei bestimmt die axiale Dimensionierung des Schachtes 56 die Größe des Leerwegs s mit.

Mit der erfindungsgemäßen Bereitstellung eines Leerwegs s kann erreicht werden, dass das Krafteingangsglied 12 zunächst bei einer Betätigung des Bremspedals bewegt werden kann, ohne dass dabei ein unmittelbares Umschalten des Steuerventils 14 erfolgt. Der Leerweg s repräsentiert somit eine erste Betätigungsphase, in der das Steuerventil 14 hinsichtlich eines Aufbaus eines Differenzdrucks an der beweglichen Wand 18 passiv bleibt und somit ein Aufbau eines Unterdrucks an der beweglichen Wand 18 zunächst unterbunden wird. In dieser ersten Betätigungsphase kann ein regeneratives Bremsen, beispielsweise durch die Verzögerungswirkung eines als Generator wirkenden Elektromotors, in dem Kraftfahrzeug als Bremswirkung genutzt werden. Wird jedoch das Krafteingangsglied 12 so weit betätigt, dass es sich über den Leerweg s hinausbewegt, so erfolgt zusätzlich oder alternativ zu der regenerativen Bremswirkung des Elektromotors eine herkömmliche Bremswirkung, bei der über einen sich an den Übertragungskolben 26 anschließenden Hauptbremszylinder und ein hydraulisches Bremssystem eine Bremskraft erzeugt wird.

In Fig. 1 kann zusätzlich ein Sensor vorgesehen sein, der beispielsweise die Bewegungen eines sich mit dem Krafteingangsglied 12 bewegenden Magneten erfasst und so elektronisch ermitteln kann, ob sich das Krafteingangsglied 12 bereits über den Leerweg s hinausbewegt hat. Nach Maßgabe der erfassten Bewegung des Krafteingangsglieds lässt sich dann die Verzögerungswirkung des Generators bei Bedarf abschalten.

Die Erfindung stellt eine einfache und zuverlässige Möglichkeit bereit, einen an sich herkömmlichen Bremskraftverstärker durch geringe konstruktiv Eingriffe für den Anwendungsfall einer regenerativen Bremsung, beispielsweise in einem Hybridfahrzeug, anzupassen.

## Patentansprüche

1. Bremskraftverstärker (10) für eine Kraftfahrzeugbremsanlage mit regenerativer Bremskrafterzeugung umfassend:
- ein Krafteingangsglied (12), das mit einem Bremspedal koppelbar oder gekoppelt ist,
- eine Kammeranordnung mit einer Unterdruckkammer (22) und einer Arbeitskammer (24), die über eine bewegliche Wand (18) voneinander getrennt sind,
- ein Steuerventil (14), über das nach Maßgabe einer Verlagerung des Krafteingangsglieds (12) die Arbeitskammer (24) wahlweise mit der Unterdruckkammer (22) und der Atmosphäre zum Erzeugen und Abbauen eines Differenzdrucks an der beweglichen Wand (18) verbindbar ist,
wobei das Steuerventil (14) ein Steuerventilgehäuse (16) aufweist, das zur gemeinsamen Bewegung mit der beweglichen Wand (18) verbunden ist,
**dadurch gekennzeichnet, dass** in einer ersten Betätigungsphase des Bremskraftverstärkers (10) aus seiner Ruhestellung heraus das Krafteingangsglied (12) relativ zu dem Steuerventilgehäuse (16) um einen Leerweg (s) verlagerbar ist, in dem das Steuerventil (14) zum Unterdrücken eines Aufbaus eines Differenzdrucks an der beweglichen Wand (18) unbetätigt bleibt.

2. Bremskraftverstärker (10) nach Anspruch 1,
**dadurch gekennzeichnet, dass** das Steuerventil (14) in der ersten Betätigungsphase eine fluidische Verbindung zwischen Unterdruckkammer (22) und Arbeitskammer (24) vorsieht und in einer zweiten Betätigungsphase nach Überschreiten des Leerwegs (s) durch das Krafteingangsglied (12) das Steuerventil (14) zum Aufbau eines Differenzdrucks an der beweglichen Wand (18) umschaltet.

3. Bremskraftverstärker (10) nach Anspruch 2,
**dadurch gekennzeichnet, dass** das Steuerventil (14) ein Ventilglied (42) aufweist, das an einen ersten Dichtsitz (36) dichtend anlegbar ist, der an dem Steuerventilgehäuse (16) ausgebildet ist und zur fluidischen Trennung von Unterdruckkammer (22) und Arbeitskammer (24) dient, und das gegen einen zweiten Dichtsitz (38) dichtend anlegbar ist, der an einem Übertragungselement (40) ausgebildet ist und zur fluidischen Trennung von Arbeitskammer (24) und Umgebungsatmosphäre dient, wobei in der ersten Betätigungsphase der erste Dichtsitz (36) von dem Ventilglied (42) abgehoben und der zweite Dichtsitz (38) dichtend an dem Ventilglied (42) anliegt.

4. Bremskraftverstärker (10) nach einem der vorangehenden Ansprüche, **gekennzeichnet durch** eine Anschlageinrichtung, die den Leerweg (s) bestimmt.

5. Bremskraftverstärker (10) nach Anspruch 4,
**dadurch gekennzeichnet, dass** die Anschlageinrichtung (54) an dem Steuerventilgehäuse (16) ausgebildet ist und dieses in einer der Ruhestellung zugeordneten Ausgangsstellung hält.

6. Bremskraftverstärker (10) nach Anspruch 5,
**dadurch gekennzeichnet, dass** die Anschlageinrichtung eine um das Steuerventilgehäuse (16) umlaufende Ringformation (54) ist, die in der Ruhestellung an einer Gegenanschlagformation am Verstärkergehäuse (16) anliegt.

7. Bremskraftverstärker (10) nach Anspruch 5 oder 6,
**dadurch gekennzeichnet, dass** die Anschlageinrichtung integral an dem Steuerventilgehäuse (16) angeformt ist.

8. Bremskraftverstärker (10) nach einem der Ansprüche 1 bis 4,
**dadurch gekennzeichnet, dass** die Anschlageinrichtung an der beweglichen Wand (18) ausgebildet ist, und diese in einer der Ruhestellung zugeordneten Ausgangsstellung arretiert.

9. Bremskraftverstärker (10) nach Anspruch 8,
**dadurch gekennzeichnet, dass** die Anschlageinrichtung in Form eines Anlageelements (50) an wenigstens einem Zugbolzen (30) ausgebildet ist, die sich durch das Verstärkergehäuse (20) hindurch erstrecken.

10. Bremskraftverstärker (10) nach Anspruch 9,
**dadurch gekennzeichnet, dass** das Anlageelement eine an dem Zugbolzen (30) verstellbar anbringbare Einstellscheibe (50) oder Einstellmutter ist.

11. Bremskraftverstärker (10) nach Anspruch 8 oder 9,
**dadurch gekennzeichnet, dass** eine Mehrzahl von Anlageelementen in regelmäßigen Winkelabständen bezüglich einer Mittelachse (A) des Bremskraftverstärkers (10) angeordnet sind.

12. Bremskraftverstärker (10) nach Anspruch 8,
**dadurch gekennzeichnet, dass** die Anschlageinrichtung eine Anlagefläche an der beweglichen Wand (18) sowie eine korrespondierende Anschlagfläche an dem Verstärkergehäuse (52) aufweist.

13. Bremskraftverstärker (10) nach einem der vorangehenden Ansprüche,
**dadurch gekennzeichnet, dass** dieser mit einer Wegerfassungseinrichtung zum Erfassen des Betätigungswegs das Krafteingangsglieds (12) ausgebildet ist.

14. Kraftfahrzeugbremsanlage mit einem einzelnen Rädern zugeordneten Bremssystem, einem mit dem Antriebsstrang des Kraftfahrzeugs kraftwirksam gekoppelten und als Generator nutzbaren Elektromotor und einem Bremskraftverstärker (10) nach einem der vorangehenden Ansprüche, wobei bei einer Betätigung des Krafteingangsglieds (12) in der ersten Betätigungsphase des Bremskraftverstärkers (10) eine Verzögerungswirkung über die Generatorwirkung des Elektromotors erfolgt, wobei eine Servokrafterzeugung über eine an der beweglichen Wand (18) anliegende Druckdifferenz unterbleibt.

15. Kraftfahrzeugbremsanlage nach Anspruch 14,
**gekennzeichnet durch** eine elektronische Steuereinrichtung, die die Verzögerungswirkung des Elektromotors zumindest in der ersten Betätigungsphase steuert.

## Claims

1. Brake booster (10) for an automotive brake system with regenerative brake force generation comprising:
- a force input element (12) that may be or is coupled to a brake pedal,
- a chamber arrangement having a vacuum chamber (22) and a working chamber (24) that are separated from one another by a movable wall (18),
- a control valve (14), by means of which in accordance with a displacement of the force input element (12) the working chamber (24) is selectively connectable to the vacuum chamber (22) and the atmosphere for generating and reducing a differential pressure at the movable wall (18), wherein the control valve (14) has a control valve housing (16) that is connected for joint movement with the movable wall (18),
**characterized in that** in a first actuation phase of the brake booster (10) from its rest position the force input element (12) is displaceable relative to the control valve housing (16) by an idle travel (s), in which the control valve (14) remains non-actuated to suppress a build-up of a differential pressure at the movable wall (18).

2. Brake booster (10) according to claim 1,
**characterized in that** the control valve (14) in the first actuation phase provides a fluidic connection between said vacuum chamber (22) and said working chamber (24) and in a second actuation phase after exceeding of the idle travel (s) by the force input element (12) the control valve (14) switches over to build up a differential pressure at the movable wall (18).

3. Brake booster (10) according to claim 2,
**characterized in that** the control valve (14) has a valve element (42) that may be laid sealingly against a first sealing seat (36), which is formed on the control valve housing (16) and used for the fluidic separation of vacuum chamber (22) and working chamber (24), and that may be laid sealingly against a second sealing seat (38), which is formed on a transmission element (40) and used for the fluidic separation of working chamber (24) and ambient atmosphere, wherein in the first actuation phase the first sealing seat (36) is lifted off the valve element (42) and the second sealing seat (38) lies sealingly against the valve element (42).

4. Brake booster (10) according to one of the preceding claims, **characterized by** a stop device that determines the idle travel (s).

5. Brake booster (10) according to claim 4,
**characterized in that** the stop device (54) is formed on the control valve housing (16) and retains the control valve housing (16) in a starting position associated with the rest position.

6. Brake booster (10) according to claim 5,
**characterized in that** the stop device is an annular formation (54) that extends around the control valve housing (16) and in the rest position rests against a counterpart stop formation on the booster housing (16).

7. Brake booster (10) according to claim 5 or 6,
**characterized in that** the stop device is formed integrally on the control valve housing (16).

8. Brake booster (10) according to one of claims 1 to 4,
**characterized in that** the stop device is formed on the movable wall (18) and locks the movable wall (18) in a starting position associated with the rest position.

9. Brake booster (10) according to claim 8,
**characterized in that** the stop device is configured in the form of a lay-on element (50) on at least one tie bolt (30), which extend through the booster housing (20).

10. Brake booster (10) according to claim 9,
**characterized in that** the lay-on element is a setting disk (50) or setting nut that is mountable adjustably on the tie bolt (30).

11. Brake booster (10) according to claim 8 or 9,
**characterized in that** a plurality of lay-on elements are arranged at regular angular intervals in relation to a centre line (A) of the brake booster (10).

12. Brake booster (10) according to claim 8,
**characterized in that** the stop device comprises a lay-on face on the movable wall (18) as well as a corresponding stop face on the booster housing (52).

13. Brake booster (10) according to one of the preceding claims, **characterized in that** it is configured with a displacement detection device for detecting the actuating displacement of the force input element (12).

14. Automotive brake system comprising a braking system associated with individual wheels, an electric motor workingly coupled to the drive train of the motor vehicle and usable as a generator, and a brake booster (10) according to one of the preceding claims, wherein upon an actuation of the force input element (12) in the first actuation phase of the brake booster (10) a deceleration effect occurs by means of the generator effect of the electric motor, wherein a servo force generation by means of a pressure difference at the movable wall (18) does not occur.

15. Automotive brake system according to claim 14,
**characterized by** an electronic control device that controls the deceleration effect of the electric motor at least in the first actuation phase.

## Revendications

1. Servofrein (10) pour un mécanisme de freinage de véhicule automobile à force de freinage régénérative, comportant :
- un organe d'entrée de force (12) pouvant être accouplé ou étant accouplé à une pédale de frein,
- un ensemble de chambres avec une chambre de dépression (22) et une chambre de travail (24) qui sont séparées l'une de l'autre par une paroi mobile (18),
- une soupape de commande (14) au moyen de laquelle, en fonction d'un déplacement de l'organe d'entrée de force (12), la chambre de travail (24) peut être reliée de façon sélective à la chambre de dépression (22) et à l'atmosphère pour produire et réduire la pression différentielle sur la paroi mobile (18), la soupape de commande (14) présentant un boîtier de soupape de commande (16) relié à la paroi mobile (18) pour un déplacement conjoint, **caractérisé en ce que** dans une première phase d'actionnement du servofrein (10), l'organe d'entrée de force (12) peut être déplacé de sa position de repos pour effectuer par rapport au boîtier de soupape de commande (16) une course à vide (s) dans le cadre de laquelle la soupape de commande (14) reste non actionnée pour réprimer la production d'une pression différentielle sur la paroi mobile (18).

2. Servofrein (10) selon la revendication 1,
**caractérisé en ce que** la soupape de commande (14) prévoit, dans la première phase d'actionnement, une liaison fluidique entre la chambre de dépression (22) et la chambre de travail (24) et **en ce que**, dans une deuxième phase d'actionnement, après le dépassement de la course à vide (s) par l'organe d'entrée de force (12), la soupape de commande (14) commute pour produire une pression différentielle sur la paroi mobile (18).

3. Servofrein (10) selon la revendication 2,
**caractérisé en ce que** la soupape de commande (14) présente un organe de soupape (42) qui peut être appliqué de manière étanche contre un premier siège étanche (36) formé sur le boîtier de soupape de commande (16) et sert à interrompre la liaison fluidique entre la chambre de dépression (22) et la chambre de travail (24), et qui peut être appliqué de manière étanche contre un deuxième siège étanche (38) formé sur un élément de transmission (40) et sert à interrompre la liaison fluidique entre la chambre de travail (24) et l'atmosphère ambiante, le premier siège étanche (36) étant décollé de l'organe de soupape (42) dans la première phase d'actionnement et le deuxième siège étanche (38) étant appliqué de manière étanche contre l'organe de soupape (42).

4. Servofrein (10) selon l'une des revendications précédentes,
**caractérisé par** un dispositif de butée qui détermine la course à vide (s).

5. Servofrein (10) selon la revendication 4,
**caractérisé en ce que** le dispositif de butée (54) est formé sur le boîtier de soupape de commande (16) et maintient celui-ci dans une position initiale associée à la position de repos.

6. Servofrein (10) selon la revendication 5,
**caractérisé en ce que** le dispositif de butée (54) consiste en une formation annulaire (54) qui fait le tour du boîtier de soupape de commande (16) et qui, dans la position au repos, est appliquée contre une contre-butée formée sur le boîtier d'amplificateur (16).

7. Servofrein (10) selon la revendication 5 ou 6,
**caractérisé en ce que** le dispositif de butée est intégralement formé sur le boîtier de soupape de commande (16)

8. Servofrein (10) selon l'une des revendications 1 à 4,
**caractérisé en ce que** le dispositif de butée est formé sur la paroi mobile (18) et bloque celle-ci dans une position initiale associée à la position de repos.

9. Servofrein (10) selon la revendication 8,
**caractérisé en ce que** le dispositif de butée est réalisé sous la forme d'un élément de contact (50) sur au moins un boulon tirant (30) qui s'étend à travers le boîtier d'amplificateur (20).

10. Servofrein (10) selon la revendication 9,
**caractérisé en ce que** l'élément de contact est une rondelle de réglage (50) ou un écrou de réglage pouvant être monté de manière mobile sur le boulon tirant (30)

11. Servofrein (10) selon la revendication 8 ou 9,
**caractérisé en ce qu'**une pluralité d'éléments de contact est disposée selon des écarts angulaires réguliers par rapport à un axe médian (A) du servofrein (10).

12. Servofrein (10) selon la revendication 8,
**caractérisé en ce que** le dispositif de butée présente une surface de contact sur la paroi mobile (18) ainsi qu'une surface de butée correspondante sur le boîtier d'amplificateur (52).

13. Servofrein (10) selon l'une des revendications précédentes,
**caractérisé en ce que** celui-ci est équipé d'un dispositif de détection de course permettant de détecter la course d'actionnement de l'organe d'entrée de force (12).

14. Mécanisme de freinage de véhicule automobile pourvu d'un système de freinage associé aux différentes roues du véhicule, d'un moteur électrique accouplé de force avec la ligne d'entraînement du véhicule automobile et utilisable comme générateur et d'un servofrein (10) selon l'une des revendications précédentes, l'effet générateur du moteur électrique engendrant un effet de retardement lorsqu'est actionné l'organe d'entrée de force (12) dans la première phase d'actionnement du servofrein (10), dans le cadre duquel il n'y a pas production d'une force de freinage assistée par pression différentielle sur la paroi mobile (18).

15. Servofrein (10) selon la revendication 14,
**caractérisé par** un dispositif de commande électronique qui commande l'effet de retardement du moteur électrique pour le moins dans la première phase d'actionnement.
